(19) Europäisches Patentamt / European Patent Office / Office européen des brevets

(11) **EP 4 675 727 A1**

(12) **EUROPEAN PATENT APPLICATION**
published in accordance with Art. 153(4) EPC

(43) Date of publication:
**07.01.2026 Bulletin 2026/02**

(21) Application number: **24763813.3**

(22) Date of filing: **26.02.2024**

(51) International Patent Classification (IPC):
*H01M 10/04* (2006.01)     *H01M 4/13* (2010.01)
*H01M 4/36* (2006.01)     *H01M 10/0587* (2010.01)

(52) Cooperative Patent Classification (CPC):
**H01M 4/13; H01M 4/36; H01M 10/04;**
**H01M 10/0587;** Y02E 60/10; Y02P 70/50

(86) International application number:
**PCT/JP2024/006716**

(87) International publication number:
**WO 2024/181333 (06.09.2024 Gazette 2024/36)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.02.2023   JP 2023030126**

(71) Applicant: **Panasonic Energy Co., Ltd.**
**Osaka 570-8511 (JP)**

(72) Inventors:
• **TAKIJIRI, Manabu**
  **Kadoma-shi, Osaka 571-0057 (JP)**
• **ISHIGURO, Tasuku**
  **Kadoma-shi, Osaka 571-0057 (JP)**

(74) Representative: **Novagraaf International SA**
**Chemin de l'Echo 3**
**1213 Onex, Geneva (CH)**

(54) **SECONDARY BATTERY**

(57) A cylindrical secondary battery (1) comprises an electrode body (10). A positive electrode (11) that constitutes the electrode body (10) has an elongated positive electrode core body (13), and a positive electrode mixture layer (14) that is positioned on the positive electrode core body (13). A plurality of exposed portions (15) where the surface of the positive electrode core body (13) is exposed are provided in the length direction of the positive electrode (11) to a widthwise end portion of the positive electrode (11). The positive electrode mixture layer (14) includes a first region (14a) and a second region (14b), the compressive elastic modulus of the first region (14a) being greater than the compressive elastic modulus of the second region (14b).

Figure 2

**Description**

TECHNICAL FIELD

The present disclosure relates to a secondary battery.

BACKGROUND

In recent years, secondary batteries such as lithium ion batteries have been widely used in applications requiring high capacity, high durability, rapid charging performance, and the like, such as in-vehicle applications and power storage applications. The positive electrode active material, which is a main constituent element of secondary batteries, has a significant effect on such battery performance, and many studies have therefore been conducted on positive electrode active materials. In general, a positive electrode has a structure in which a mixture layer containing a positive electrode active material is formed on a core made of a metal foil. For example, Patent Literature 1 discloses a positive electrode having a plurality of leads welded at intervals along the longitudinal direction.

When joining a plurality of leads to the positive electrode at intervals along the longitudinal direction as in the positive electrode disclosed in Patent Literature 1, as the portions for joining the leads, exposed portions where the surface of the positive electrode core is exposed must be formed in a plural number along the longitudinal direction. Although a strip-shaped exposed portion that is continuous in the longitudinal direction is formed at a widthwise end part in the positive electrode of Patent Literature 1, from the perspective of achieving a high battery capacity, the area of the exposed portion is preferably kept to the minimum size required. Specifically, one may consider to arrange exposed portions and the mixture layer alternately in the longitudinal direction at a widthwise end part of the positive electrode.

CITATION LIST

PATENT LITERATURE

PATENT LITERATURE 1: Japanese Unexamined Patent Application Publication No. 2001-176489

SUMMARY

However, when an electrode assembly is produced using a positive electrode in which exposed portions of the core and the mixture layer are arranged alternately in the longitudinal direction at a widthwise end part of the positive electrode, it is considered that a large difference in surface pressure occurs at the time of charging and discharging between the widthwise end part of the positive electrode and other portions, i.e., portions where the positive electrode mixture layer is continuously provided in the longitudinal direction. As a result, at a part corresponding to the widthwise end part of the positive electrode, a gap may be formed between electrode plates constituting the electrode assembly. If such a gap is formed, for example, there would be a risk that peeling of the mixture layer may occur during charge-discharge cycles.

A secondary battery according to the present disclosure is a secondary battery comprising an electrode assembly which includes a positive electrode, a negative electrode, and a separator, and in which the positive electrode and the negative electrode are wound with the separator interposed. The positive electrode has an elongate positive electrode core and a positive electrode mixture layer provided on the positive electrode core. At a widthwise end part of the positive electrode, exposed portions where a surface of the positive electrode core is exposed are provided in a plural number along a longitudinal direction of the positive electrode. When a region composed of the exposed portions and parts of the positive electrode mixture layer sequentially arranged in the longitudinal direction of the positive electrode is defined as a first region, and a region in which the positive electrode mixture layer is continuous in the longitudinal direction of the positive electrode is defined as a second region, a compressive elastic modulus of the first region is greater than a compressive elastic modulus of the second region.

According to the secondary battery according to the present disclosure, occurrence of a gap between electrode plates constituting the electrode assembly can be effectively suppressed.

BRIEF DESCRIPTION OF DRAWINGS

FIG. 1 is a cross-sectional view of a secondary battery according to an example embodiment.
FIG. 2 is a front view of a positive electrode according to an example embodiment.

DESCRIPTION OF EMBODIMENTS

Example embodiments of a secondary battery according to the present disclosure will now be described in detail by reference to the drawings. Configurations obtained by selectively combining the constituent elements of a plurality of embodiments and variants described below are included within the scope of the present disclosure.

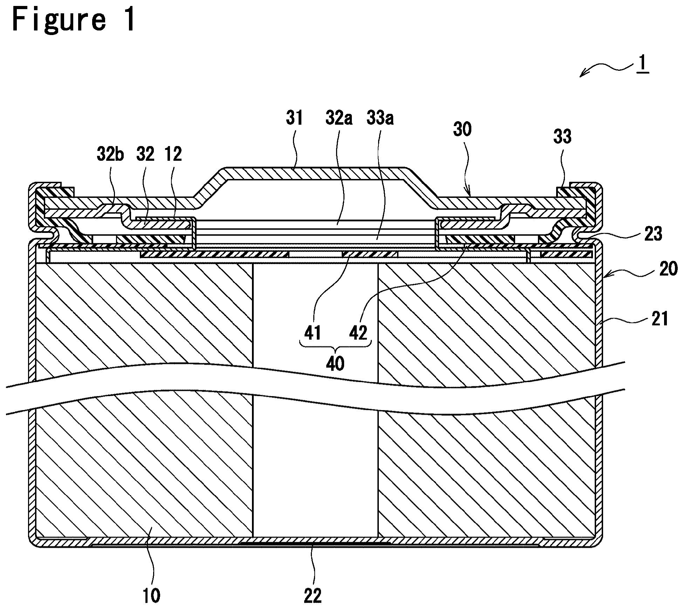

In the embodiments described below, as the secondary battery, a cylindrical battery 10 in which a spiral-type electrode assembly 14 is housed in a bottomed cylindrical outer can 16 will be referred to by way of example. However, the outer casing of the battery is not limited to a cylindrical outer can, and the form of the cylindrical battery is likewise not limited to that shown by way of example in FIG. 1. Other embodiments of the secondary battery according to the present disclosure include a rectangular battery having a rectangular outer can, and a pouch-type battery having an outer casing composed of a laminate sheet including a metal layer and a resin layer. Furthermore, while the electrolyte may be an aqueous electrolyte, a non-aqueous electrolyte is used in the present embodiment.

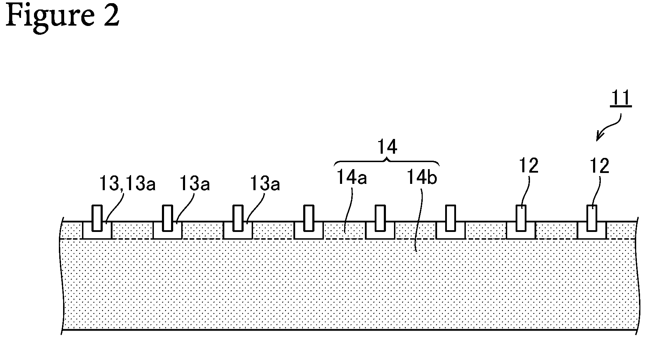

FIG. 1 is a cross-sectional view of a cylindrical battery 1 according to an example embodiment. As shown in FIG. 1, the cylindrical battery 1 comprises an electrode assembly 10, a non-aqueous electrolyte, a bottomed cylindrical outer can 20 that houses the electrode assembly 10 and the non-aqueous electrolyte, and a sealing assembly 30 that closes the opening of the outer can 20. The outer can 20 has a grooved portion 23 formed in its side wall 21, and the sealing assembly 30 closes the opening of the outer can 20 by being supported on the grooved portion 23. The electrode assembly 10 comprises a positive electrode 11 (see FIG. 2 described later), a negative electrode, and a separator, and has a structure formed by spirally winding the positive electrode 11 and the negative electrode with the separator interposed. In the following, for convenience of explanation, the side of the cylindrical battery 1 toward the sealing assembly 30 will be referred to as "upper", and the side toward the can bottom 22 of the outer can 20 will be referred to as "lower".

The cylindrical battery 1 further comprises positive electrode leads 12 connecting between the positive electrode and a current collector plate 32 of the sealing assembly 30, and an upper insulating plate 40 provided between the electrode assembly 10 and the sealing assembly 30. In the present embodiment, the positive electrode leads 12 electrically connect between the positive electrode and the sealing assembly 30, and a negative electrode lead electrically connects between the negative electrode and the outer can 20. Accordingly, the sealing assembly 30 functions as the positive electrode external terminal, and the outer can 20 functions as the negative electrode external terminal. The cylindrical battery 1 may have a lower insulating plate provided between the electrode assembly 10 and the can bottom 22.

As will be described in more detail later, the cylindrical battery 1 has a plurality of positive electrode leads 12. As the portions for joining the positive electrode leads 12, at a widthwise end part of the positive electrode, exposed portions where the surface of the positive electrode core is exposed are provided in a plural number along the longitudinal direction of the positive electrode. In the present embodiment, the upper insulating plate 40 includes a first insulating plate 41 and a second insulating plate 42 located closer to the sealing assembly 30 than is the first insulating plate 41. The first insulating plate 41 is interposed between the electrode assembly 10 and the positive electrode leads 12, and prevents contact between the negative electrode and the positive electrode leads 12. The second insulating plate 42 is interposed between the grooved portion 23 of the outer can 20 and the positive electrode leads 12, and prevents contact between the outer can 20, which serves as the negative electrode external terminal, and the positive electrode leads 12.

The non-aqueous electrolyte has ionic conductivity. The non-aqueous electrolyte may be either a liquid electrolyte (or electrolyte solution) or a solid electrolyte.

The liquid electrolyte (or electrolyte solution) contains a non-aqueous solvent and an electrolyte salt dissolved in the non-aqueous solvent. As the non-aqueous solvent, for example, esters, ethers, nitriles, amides, a mixed solvent containing two or more of the foregoing, and the like are used. Examples of the non-aqueous solvent include ethylene carbonate (EC), ethyl methyl carbonate (EMC), dimethyl carbonate (DMC), diethyl carbonate (DEC), and a mixed solvent containing the foregoing solvents. The non-aqueous solvent may contain a halogen-substituted product (such as fluoroethylene carbonate) obtained by substituting at least part of hydrogen atoms in the above solvents with halogen atoms such as fluorine. As the electrolyte salt, for example, a lithium salt such as $LiPF_6$ is used.

As the solid electrolyte, for example, a solid or gel polymer electrolyte, an inorganic solid electrolyte, and the like can be used. As the inorganic solid electrolyte, it is possible to use a material known for use in all-solid-state lithium ion secondary batteries and the like (such as an oxide-based solid electrolyte, a sulfide-based solid electrolyte, or a halogen-based solid electrolyte). The polymer electrolyte contains, for example, a lithium salt and a matrix polymer, or alternatively contains a non-aqueous solvent, a lithium salt, and a matrix polymer. As the matrix polymer, for example, a polymer material that absorbs a non-aqueous solvent and forms a gel is used. Examples of the polymer material include fluororesins, acrylic resins, and polyether resins.

The positive electrode, the negative electrode, and the separator, which constitute the electrode assembly 10, are all elongate strip-shaped members, and are alternately laminated in the radial direction of the electrode assembly 10 by being wound in a spiral shape. The negative electrode is formed to have a size slightly larger than the positive electrode in order to prevent lithium deposition. That is, the negative electrode is formed to be longer than the positive electrode in the longitudinal direction and in the width direction. The separator is formed to have a size slightly larger than at least the positive electrode, and, for example, two sheets of the separator are arranged so as to sandwich the positive electrode. The electrode assembly 10 has positive electrode leads 12 connected to the positive electrode by welding or the like, and a negative electrode lead connected to the negative electrode by welding or the like.

The diameter of the electrode assembly 10 is, for example, greater than or equal to 40 mm. When the diameter of the electrode assembly 10 is larger, the advantageous effects of the positive electrode configuration according to the present disclosure are more notably exhibited. The upper limit of the diameter of the electrode assembly 10 is not particularly limited, and is, in one example, 100 mm. A suitable example of the diameter of the electrode assembly 10 is greater than or equal to 40 mm and less than or equal to 80 mm, or greater than or equal to 45 mm and less than or equal to 70 mm. The diameter of the electrode assembly 10 mainly depends on the length of the electrode plates.

The positive electrode comprises a positive electrode core and a positive electrode mixture layer provided on the positive electrode core. As the positive electrode core, it is possible to use a foil of a metal such as aluminum, aluminum alloy, stainless steel, or titanium that is stable in the potential range of the positive electrode, a film having such metal provided on its surface layer, and the like. The positive electrode mixture layer contains a positive electrode active material, a conductive agent, and a binder, and is preferably formed on both sides of the positive electrode core in areas other than the portions to which the positive electrode leads 12 are connected. As the positive electrode active material, a lithium transition metal composite oxide containing transition metal elements such as Ni, Co, and Mn is used.

The negative electrode comprises a negative electrode core and a negative electrode mixture layer provided on the negative electrode core. As the negative electrode core, it is possible to use a foil of a metal such as copper, copper alloy, stainless steel, nickel, or nickel alloy that is stable in the potential range of the negative electrode, a film having such metal provided on its surface layer, and the like. The negative electrode mixture layer contains a negative electrode active material and a binder, and is preferably formed on both sides of the negative electrode core in areas other than the portion to which the negative electrode lead is connected. As the negative electrode active material, a carbon material that reversibly occludes and releases lithium ions is generally used. As the negative electrode active material, it is also possible to use an element such as Si or Sn that forms an alloy with Li, a material containing such element, and the like.

As the separator, a porous sheet having ion permeability and insulating property is used. Specific examples of the porous sheet include a microporous thin film, a woven fabric, and a non-woven fabric. As the material of the separator, polyolefins such as polyethylene and polypropylene, cellulose, and the like are suitable. The separator may have either a single-layer structure or a multi-layer structure. For example, the separator may have a multi-layer structure including a thermoplastic resin layer made of polyolefin or the like and a cellulose fiber layer, a two-layer structure composed of polyethylene (PE) and polypropylene (PP), or a three-layer structure composed of PE, PP, and PE.

The outer can 20 is a bottomed cylindrical metal container having an opening at one axial end (or upper end), and comprises a side wall 21 formed in a cylindrical shape, and a can bottom 22 having a circular shape in bottom view. The outer can 20 is generally composed of a metal containing iron as the main component, but may alternatively be composed of a metal containing aluminum or the like as the main component. The outer can 20 has a grooved portion 23 formed in the side wall 21 along the circumferential direction. The grooved portion 23 is formed near the opening of the outer can 20 at a position spaced by a predetermined length from the edge of the opening (or the upper end of the outer can 20). In the present embodiment, a safety vent is formed in the can bottom 22 of the outer can 20 for releasing gas when the internal pressure increases upon occurrence of an abnormality.

The grooved portion 23 is a portion of the side wall 21 that protrudes inward of the outer can 20, and is formed, for example, by subjecting the side wall 21 to a spinning process from the outside. At the position where the grooved portion 23 is formed, the outer can 20 is reduced in diameter, and a groove in the shape of a thin line is formed on the outer peripheral surface of the side wall 21. It is preferable that the grooved portion 23 has a generally U-shaped cross section and is formed in an annular shape over the entire circumference of the side wall 21. The grooved portion 23 is formed by processing the side wall 21 after the electrode assembly 10 is placed inside the outer can 20.

The sealing assembly 30 comprises a cap 31, a current collector plate 32, and a gasket 33, and is formed in a disk shape as a whole. The sealing assembly 30 is arranged on the grooved portion 23 of the outer can 20 and fixed to an upper end part of the outer can 20. The upper end part of the outer can 20 is bent inward and crimped against the sealing assembly 30. In other words, the sealing assembly 30 is fixed to the upper end part of the outer can 20 by means of the grooved portion 23 and the crimped portion of the outer can 20, and closes the opening of the outer can 20. The crimped portion is formed in an annular shape along the circumferential direction of the outer can 20, and holds the sealing assembly 30 in cooperation with the grooved portion 23.

The cap 31 is a disk-shaped metal member that is exposed to the outside of the outer can 20 and constitutes the top face of the cylindrical battery 1. The cap 31 has a shape in which its radially central part protrudes outward of the cylindrical battery 1. When incorporating the cylindrical battery 1 into a module to form a battery pack, a wiring member is connected to the cap 31. As such, the cap 31 functions as an external terminal of the cylindrical battery 1, and is also referred to as an external terminal or a top cover. In the present embodiment, the positive electrode leads 12 are connected to the current collector plate 32, and the cap 31 functions as the positive electrode external terminal.

The current collector plate 32 is a metal member having a diameter approximately equal to that of the cap 31, and is located closer to the electrode assembly 10 than is the cap 31. The current collector plate 32 has an opening 32a in its radially central part, and is formed in a ring shape. The cap 31 and the current collector plate 32 are welded together, and, for example, the current collector plate 32 is welded to the cap 31 at a position closer to the outer circumferential edge than to the radially central part. A projection 32b is formed in the current collector plate 32, and this projection 32b serves as the portion welded to the cap 31.

The gasket 33 is provided at the outer periphery of a laminated member composed of the cap 31 and the current collector plate 32. The gasket 33 is a resin member for hermetically sealing the inside of the battery, and for preventing the cap 31 and the current collector plate 32 from being in contact with the outer can 20 to thereby ensure insulation between the outer can 20 and the sealing assembly 30. The gasket 33 is a ring-shaped resin member, and has an opening 33a formed in its radially central part, which vertically overlaps with the opening 32a of the current collector plate 32.

The positive electrode 11 constituting the electrode assembly 10 will now be described in detail by reference to FIG. 2. FIG. 2 is a front view of the positive electrode 11 to which the positive electrode leads 12 are connected, and shows the positive electrode 11 in the developed state.

As shown in FIG. 2, the positive electrode 11 is an elongate strip-shaped member, and a plurality of positive electrode leads 12 are connected to the positive electrode 11 at predetermined intervals along the longitudinal direction. As described above, the positive electrode 11 includes an elongate positive electrode core 13 and a positive electrode mixture layer 14 provided on both sides of the positive electrode core 13. Further, at a widthwise end part of the positive electrode 11, as the portions to which the positive electrode leads 12 are connected, exposed portions 15 where the surface of the positive electrode core 13 is exposed are provided in a plural number along the longitudinal direction of the positive electrode 11. The plurality of exposed portions 15 are sequentially arranged in one row in the longitudinal direction of the positive electrode 11 at one end part of the positive electrode 11 in the width direction (i.e., one widthwise end part), which is located toward the upper end of the electrode assembly 10.

The longitudinal direction of the positive electrode 11 is a first direction which is along the horizontal direction in FIG. 2, and the width direction of the positive electrode 11 is a second direction which is along the vertical direction in FIG. 2 and perpendicular to the first direction. The length (i.e., the length in the first direction) of the positive electrode 11 is, for example, greater than or equal to 30 times and less than or equal to 70 times the width (i.e., the length in the second direction) of the positive electrode 11, and is, in one example, greater than or equal to 3000 mm and less than or equal to 4000 mm. The width of the positive electrode 11 is, for example, greater than or equal to 60 mm and less than or equal to 80 mm, and is uniform over the entire length.

Each positive electrode lead 12 is a rectangular conductive member, and is, for example, composed of a metal containing aluminum as the main component. All of the positive electrode leads 12 extend in the same direction and project upward from the one widthwise end part of the positive electrode 11. In the present embodiment, one longitudinal end of each positive electrode lead 12 is joined to the positive electrode 11, and the other longitudinal end is joined to the current collector plate 32 of the sealing assembly 30. The number of the positive electrode leads 12 is not particularly limited, and is, in one example, greater than or equal to 4 and less than or equal to 15. In the present embodiment, eight positive electrode leads 12 are connected to the positive electrode 11.

The exposed portions 15 are provided in the same number as the positive electrode leads 12. The positive electrode leads 12 are preferably joined to the exposed portions 15 in a one-to-one manner by welding or the like. The positive electrode leads 12 are joined to only one side of the positive electrode core 13, but the exposed portions 15 are provided on both sides of the positive electrode 11. The exposed portions 15 are formed in an overlapping manner in the thickness direction of the positive electrode 11, and formed to have substantially the same size. No limitation is imposed on the joining position of the positive electrode lead 12 in each exposed portion 15, and it is sufficient so long as the positive electrode lead 12 is located within the exposed portion 15 so as not to overlap with the positive electrode mixture layer 14.

In the embodiment shown in FIG. 2, the respective exposed portions 15 have identical sizes and are formed at equal intervals. However, the sizes of the exposed portions 15 may be different from each other, and the exposed portions 15 may be formed at different intervals. Each exposed portion 15 preferably has a rectangular shape in front view. The layout of the positive electrode leads 12 in the electrode assembly 10, the positions of connection of the positive electrode leads 12 to the current collector plate 32, and the like are set as appropriate according to the battery performance of the cylindrical battery 1, such as the capacity and the output characteristic. Accordingly, the sizes and intervals of the exposed portions 15 may be determined according to the layout and the like. Further, in order to ensure positioning of the positive electrode leads 12 within the exposed portions 15, the lengths of the exposed portions 15 may be made different between a part toward the inner periphery and a part toward the outer periphery of the electrode assembly 10.

The length of each exposed portion 15 along the longitudinal direction of the positive electrode 11 must be greater than the width of the positive electrode leads 12, and is, for example, greater than or equal to 5 mm and less than or equal to 50 mm, and preferably greater than or equal to 10 mm and less than or equal to 40 mm. The length (i.e., the width) of each exposed portion 15 along the width direction of the positive electrode 11 is preferably less than or equal to 25 % of the width of the positive electrode 11, and more preferably greater than or equal to 10 % and less than or equal to 20 % of the width of the positive electrode 11. The widths of the respective exposed portions 15 are preferably identical to each other, and are, in one example, greater than or equal to 7 mm and less than or equal to 15 mm. Each exposed portion 15 is formed to have a uniform width from the one widthwise end of the positive electrode 11.

When a region composed of the exposed portions 15 and parts of the positive electrode mixture layer 14 sequentially arranged in the longitudinal direction of the positive electrode 11 is defined as a first region 14a, and a region in which the positive electrode mixture layer 14 is continuous in the longitudinal direction of the positive electrode 11 is defined as a second region 14b, the positive electrode 11 is characterized in that the compressive elastic modulus ($E\alpha$) of the first region 14a is greater than the compressive elastic modulus ($E\beta$) of the second region 14b. With this feature, occurrence of a gap between the electrode plates of the electrode assembly 10 can be effectively suppressed. Since the amount of the positive electrode active material in the first region 14a is less than that in the second region 14b by an amount corresponding to the area of the exposed portions 15, it is considered that a large difference in surface pressure would occur between the two regions during charging and discharging of the battery, and as a result, gaps would be likely to occur in the first region 14a. When the condition $E\alpha > E\beta$ is satisfied, it is considered that the surface pressure in the first region 14a can be increased and the surface pressure difference can thereby be alleviated, so that occurrence of a gap can be sufficiently suppressed.

In the present embodiment, the respective exposed portions 15 have the same width, and the width of the first region 14a is the same as the width of the exposed portions 15. When the widths of the exposed portions 15 are not uniform, a region having an extent corresponding to the average value of the widths of the exposed portions 15 from the one widthwise end of the positive electrode 11 is defined as the first region 14a. Further, while the entire first region 14a exhibits substantially the same compressive elastic modulus ($E\alpha$) value (and the same applies to the second region 14b) in the present embodiment, it is sufficient so long as the condition $E\alpha > E\beta$ is satisfied when the first region 14a is regarded as a whole, and the compressive elastic modulus ($E\alpha$) of a part of the first region 14a may be less than or equal to the compressive elastic modulus ($E\beta$) of the second region 14b. When the compressive elastic modulus of each region is not uniform throughout the region, it is sufficient so long as the average compressive elastic modulus values of the respective regions satisfy the condition $E\alpha > E\beta$.

While the above-described advantageous effects are achieved when the positive electrode 11 satisfies the condition $E\alpha > E\beta$, the compressive elastic modulus ($E\alpha$) of the first region 14a is preferably greater than or equal to 18 GPa, more preferably greater than or equal to 20 GPa, and particularly preferably greater than or equal to 23 GPa. In that case, the above-described advantageous effects become more notable. Although the upper limit of the compressive elastic modulus ($E\alpha$) is not particularly limited, if it is excessively high, there may be cases where a balance with the compressive elastic modulus ($E\beta$) of the second region 14b would be lost, and a gap would be more likely to occur between the electrode plates. The upper limit of the compressive elastic modulus ($E\alpha$) is, for example, 40 GPa. An example of a suitable range for the compressive elastic modulus ($E\alpha$) is greater than or equal to 18 GPa and less than or equal to 35 GPa.

Each compressive elastic modulus of the positive electrode mixture layer 14 is measured by a dynamic ultra-micro hardness tester (DUH-211S) manufactured by Shimadzu Corporation. A method having measurement conditions in accordance with JIS Z2255 is used. Although it is possible to change the compressive elastic modulus of the positive electrode mixture layer 14 by adjusting the types and amounts of the conductive agent and binder added, the compressive elastic modulus is largely dependent on the hardness of the positive electrode active material. The hardness of the positive electrode active material can be evaluated by particle crushing strength. The compressive elastic modulus is calculated based on the amount of displacement of the electrode plates resulting from extension that occurs from the start of measurement up to application of a compressive pressure of 0.4 GPa.

The positive electrode mixture layer 14 is formed by applying a positive electrode mixture slurry containing a positive electrode active material, a conductive agent, and a binder onto both sides of the positive electrode core 13, and then drying and compressing the applied coating. The condition $E\alpha > E\beta$ can be realized by, for example, forming the first region 14a and the second region 14b using two types of slurries containing different positive electrode active materials. Specifically, a first positive electrode active material having a high particle crushing strength is added to the slurry for forming the first region 14a, and a second positive electrode active material having a low particle crushing strength is added to the slurry for forming the second region 14b. The first region 14a can be formed by applying the positive electrode mixture slurry onto the core 13 in an intermittent manner along the longitudinal direction.

The average particle crushing strength of the positive electrode active material contained in the first region 14a is preferably higher than the average particle crushing strength of the positive electrode active material contained in the second region 14b. The average particle crushing strength of the positive electrode active material contained in the first region 14a is preferably greater than or equal to 100 MPa, more preferably greater than or equal to 150 MPa, and particularly preferably greater than or equal to 250 MPa, and may be greater than or equal to 500 MPa. The upper limit of the average particle crushing strength is not particularly limited, and is, for example, 1000 MPa or 700 MPa.

The particle crushing strength of a positive electrode active material is measured using a micro compression tester (MCT-W201) manufactured by Shimadzu Corporation. The measurement procedure is as follows.

(1) Spread the positive electrode active material on the lower pressurizing plate (SKS plate) of the measuring device.
(2) Using an optical microscope, select particles having a size close to the volume-based median diameter (D50).
(3) Using a flat diamond indenter having a diameter of 50 μm as the upper pressurizing member, adjust such that only one particle is present between the upper pressurizing member and the lower pressurizing plate.
(4) Slowly lower the upper pressurizing member, and from the point of coming into contact with the graphite particle (at which the lowering speed is changed), start applying a load with a constant acceleration.
(5) Measure the relationship between the load and deformation of the particle, and determine, as the crushing point, the point at which the amount of particle deformation has changed suddenly (i.e., the inflection point of the load-deformation profile). Using the load and the particle size at that point, calculate the crushing strength based on the formula below. The average particle crushing strength is calculated by averaging measurement values of five graphite particles.

$$St = 2.8P/\pi d^2$$

St: crushing strength [MPa]; P: load [N]; d: particle size [mm]

The compressive elastic modulus (Eβ) of the second region 14b is less than the compressive elastic modulus (Eα) of the first region 14a, and is preferably less than or equal to 20 GPa, more preferably less than or equal to 19 GPa, and particularly preferably less than or equal to 18 GPa. In that case, the above-described advantageous effects become more notable. The lower limit of the compressive elastic modulus (Eβ) is not particularly limited, and is, in one example, 15 GPa. An example of a suitable range of the compressive elastic modulus (Eβ) is greater than or equal to 15 GPa and less than or equal to 20 GPa, or greater than or equal to 16 GPa and less than or equal to 18 GPa. The average particle crushing strength of the positive electrode active material contained in the second region 14b is preferably less than or equal to 250 MPa, and more preferably less than or equal to 150 MPa, and may be less than or equal to 100 MPa. The lower limit of the average particle crushing strength is not particularly limited, and is, for example, 50 MPa.

The ratio (Eα/Eβ) of the compressive elastic modulus (Eα) of the first region 14a to the compressive elastic modulus (Eβ) of the second region 14b is preferably greater than or equal to 1.15, more preferably greater than or equal to 1.30, and particularly preferably greater than or equal to 1.50. In that case, the above-described advantageous effects become more notable. The upper limit of the ratio (Eα/Eβ) is not particularly limited, and is, in one example, 2.50.

The first region 14a and the second region 14b contain different types of positive electrode active materials. The positive electrode active materials contained in the respective regions may have different compositions, or may have substantially the same composition but different particle shapes. Alternatively, the regions may each contain two or more types of positive electrode active materials, and the mass ratio thereof may be different between the two regions. Combinations of positive electrode active materials in the respective regions are determined so that the condition Eα > Eβ is satisfied. Specific examples of the positive electrode active materials will be described further below.

The first region 14a may contain the first positive electrode active material in the form of single particles in a non-aggregated state. In the present specification, a single particle means an individual primary particle, i.e., a single-crystal particle having no grain boundaries inside the particle, or a secondary particle formed by clustering of 15 or less primary particles. As compared with secondary particles formed by aggregation of a large number of primary particles, single particles have higher particle crushing strength, and serve to better increase the compressive elastic modulus of the positive electrode mixture layer 14. The particle crushing strength can be controlled, for example, by adjusting the firing conditions of the positive electrode active material. A higher firing temperature and a longer firing time tend to result in a higher crushing strength. In addition, the crystallite size tends to become larger.

The non-aggregated state of the positive electrode active material is observed in a scanning electron microscope (SEM) image of particle cross sections. For example, by embedding the positive electrode 11 into a resin and performing cross-section polisher (CP) processing or the like, a cross section of the positive electrode is prepared, and a cross section of the positive electrode mixture layer in this cross section is captured by SEM. Alternatively, by embedding a powder of the positive electrode active material into a resin and performing CP processing or the like, particle cross sections are prepared, and these cross sections are captured by SEM. To quantify the clustered state of primary particles, first, particles whose particle diameters, which can be checked in a cross-sectional SEM image, are within an error of 10 % from the volume average particle size are selected, and the size of primary particles is checked. Then, assuming that each of the primary particles and aggregated particles is in the form of a perfect sphere, the clustered state is determined by a ratio of the volume of the primary particles to the volume estimated from the volume average particle size.

The first region 14a and the second region 14b may each contain the first positive electrode active material in the form of single particles, and the second positive electrode active material in the form of secondary particles formed by aggregation of a large number of primary particles having an average particle size of greater than or equal to 50 nm and less than or equal to 5 μm. In that case, the proportion of the first positive electrode active material in the positive electrode active material contained in the first region 14a is preferably higher than the proportion of the first positive electrode active material in the positive electrode active material contained in the second region 14b. The average particle size of the primary particles is calculated by measuring the diameters of 100 circles circumscribing primary particles extracted by analyzing a scanning electron microscope (SEM) image of cross sections of secondary particles, and averaging the measured values.

The proportion of the first positive electrode active material in the positive electrode active material contained in the first region 14a is, for example, greater than or equal to 20 mass%, or greater than or equal to 30 mass%, and may be substantially 100 %. The first region 14a containing a large amount of single particles tends to have a high compressive elastic modulus. The proportion of the first positive electrode active material in the positive electrode active material contained in the second region 14b is, for example, less than or equal to 30 mass%, or less than or equal to 25 mass%, and may be greater than or equal to 15 mass% and less than or equal to 30 mass%. The first region 14a may include substantially only the first positive electrode active material, and the second region 14b may include substantially only the second positive electrode active material.

The volume-based median diameter (D50) of the first positive electrode active material (single particles) is preferably greater than or equal to 2 $\mu$m and less than or equal to 12 $\mu$m. The D50 of the second positive electrode active material (secondary particles) is greater than the D50 of the first positive electrode active material, and is preferably greater than or equal to 10 $\mu$m and less than or equal to 20 $\mu$m. In the present specification, D50 means a particle size at which, in a volume-based particle size distribution, the cumulative frequency from the smaller particle size end reaches 50 %. The particle size distribution of a positive electrode active material can be measured with a laser diffraction particle size distribution measuring device (e.g., MT3000II manufactured by MicrotracBEL Corp.) using water as the dispersion medium.

Each positive electrode active material is particles of a lithium metal composite oxide containing transition metal elements such as Ni, Co, and Mn. Examples of the metal elements contained in the lithium metal composite oxide include Li, Ni, Co, Mn, Al, Be, B, Na, Mg, Si, K, Ca, Sc, Ti, V, Cr, Fe, Cu, Zn, Ga, Sr, Y, Zr, Nb, Mo, In, Sn, Sb, Ba, Ta, W, Pb, and Bi. The crystal structure of the lithium metal composite oxide is, for example, a layered rock salt structure belonging to the space group R-3m.

The lithium metal composite oxide can be synthesized, for example, by mixing together a composite oxide raw material containing Ni, Co, Mn, and the like, and a Li raw material such as lithium hydroxide, and firing the mixture. The fired product may be pulverized, classified, and the like, and may be washed with water. The composite oxide raw material containing Ni, Co, Mn, and the like can be obtained, for example, by causing a composite hydroxide containing Ni, Co, Mn, and the like to be precipitated (or coprecipitated), and heat-treating the composite hydroxide.

The above composite hydroxide can be synthesized, for example, by adding dropwise an alkaline solution of sodium hydroxide or the like to a solution of a metal salt containing Ni, Co, Mn, and the like while stirring, and adjusting the pH to the alkaline side (for example, higher than or equal to 8.5 and lower than or equal to 12.5). The particle size of the composite hydroxide tends to become smaller when the pH during synthesis is higher, and can also be controlled by adjusting the amount of the metal salt solution added. Lithium metal composite oxides having different particle sizes can be selectively produced by controlling the particle size of the composite hydroxide.

The process of firing the mixture of the composite oxide raw material and the Li raw material may be a multi-step firing process including a first firing step and a second firing step performed at a higher temperature than the first firing step. The firing of the mixture is performed in an oxygen atmosphere, and at that time, the oxygen concentration is set to, for example, higher than or equal to 85 %. A suitable first firing temperature varies somewhat depending on the composition of the mixture, and is, in one example, higher than or equal to 500 °C and lower than or equal to 750 °C. A suitable second firing temperature is, for example, higher than or equal to 800 °C and lower than or equal to 1150 °C. It is preferable that there is a temperature difference of more than or equal to 50 °C between the temperatures of the respective firing steps.

Also by adjusting the firing temperature of the raw material mixture, the compressive strength of finally-obtained composite oxide particles can be controlled, and the non-aggregated state of the particles can be adjusted. In order to produce high Ni-content oxide particles in the form of non-aggregated particles having a compressive strength of greater than or equal to 250 MPa, the firing temperature of the raw material mixture is preferably in the range of, for example, higher than or equal to 750 °C and lower than or equal to 1100 °C. The firing temperature is preferably more than or equal to 20 hours and less than or equal to 150 hours, and more preferably more than or equal to 20 hours and less than or equal to 100 hours. If the firing time for high Ni-content composite oxide particles exceeds 150 hours, for example, material properties and electrochemical characteristics may become deteriorated as compared to when the firing time is less than or equal to 150 hours.

Examples of the conductive agent contained in the positive electrode mixture layer 14 include carbon black such as acetylene black and Ketjenblack, graphite, carbon nanotubes (CNT), carbon nanofibers, graphene, metal fibers, metal powder, and conductive whiskers. One type of conductive agent may be used alone, or two or more types may be used in combination.

Examples of the binder contained in the positive electrode mixture layer 14 include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, and acrylic resins such as polyacrylonitrile (PAN), polyimide, polyamide, and ethylene-acrylic acid copolymer. These resins may be used in combination with carboxymethyl cellulose (CMC) or a salt thereof, polyethylene oxide (PEO), and the like. One type of binder may be used alone, or two or more types may be used in combination.

The mass ratio of the positive electrode active material, the conductive agent, and the binder in the first region 14a and that in the second region 14b may be identical to or different from each other. The content of the positive electrode active material in the positive electrode mixture layer 14 is, for example, greater than or equal to 95 mass% and less than or equal to 99 mass%. The content of each of the conductive agent and the binder in the positive electrode mixture layer 14 is, for example, greater than or equal to 0.5 mass% and less than or equal to 2.0 mass%.

EXAMPLES

While the present disclosure will now be further described using Examples, the present disclosure is not limited to these Examples.

[Synthesis of Lithium Metal Composite Oxide X1]

A composite hydroxide containing Ni, Co, and Al in a molar ratio of 85:10:5 was synthesized by a co-precipitation method, and then heat-treated at 600 °C to obtain a composite oxide. In the synthesis of the composite hydroxide, the pH and the amount of the metal salt solution were adjusted so that the D50 of the lithium metal composite oxide to be finally obtained would be approximately 15 $\mu$m. The obtained composite oxide and lithium hydroxide were mixed such that the molar ratio (or Li/Me ratio) of the metal elements (Me) in the composite oxide and Li in the lithium hydroxide was 1:1.020. This mixture was placed in a firing furnace and fired in two steps.

In the firing process, the mixture was heated in an oxygen stream having an oxygen concentration of 95 % (with a flow rate of 2 mL/min per 10 cm$^3$ and 5 L/min per 1 kg of the mixture) from room temperature to 650 °C (or the first firing temperature) at a heating rate (or first heating rate) of 3 °C/min. After that, the temperature was increased from 650 °C to 750 °C (or the second firing temperature) at a heating rate (or second heating rate) of 1 °C/min, and the temperature was maintained at 750 °C for 3 hours. The fired product was pulverized and then washed with water, and lithium metal composite oxide X1 was thereby obtained.

The volume-based D50 of lithium metal composite oxide X1 as measured with MT3000II manufactured by MicrotracBEL Corp. while using water as the dispersion medium was 12 $\mu$m. The particle crushing strength as measured by the above-described method using a micro compression tester (MCT-W201) manufactured by Shimadzu Corporation was 198 MPa. Further, from a SEM image of particle cross sections, it was confirmed that the composite oxide was in the form of secondary particles formed by aggregation of primary particles having an average particle size of 500 nm.

[Synthesis of Lithium Metal Composite Oxide X2]

Lithium metal composite oxide X2, which was of a secondary-particle type, was obtained in the same manner as in the synthesis of lithium metal composite oxide X1, except that the second firing temperature and the firing time were adjusted so that the D50 was12 $\mu$m and the particle crushing strength was 117 MPa.

[Synthesis of Lithium Metal Composite Oxide X3]

Lithium metal composite oxide X3, which was of a secondary-particle type, was obtained in the same manner as in the synthesis of lithium metal composite oxide X1, except that the second firing temperature and the firing time were adjusted so that the D50 was 12 $\mu$m and the particle crushing strength was 90 MPa.

[Synthesis of Lithium Metal Composite Oxide Y1]

Lithium metal composite oxide Y1, which was of a single-particle type, was obtained in the same manner as in the synthesis of lithium metal composite oxide X1, except that the firing temperature was set to 1000 °C and the firing time was adjusted so that the D50 was 6 $\mu$m and the particle crushing strength was 650 MPa.

[Synthesis of Lithium Metal Composite Oxide Y2]

Lithium metal composite oxide Y2, which was of a single-particle type, was obtained in the same manner as in the synthesis of lithium metal composite oxide Y1, except that the firing time was adjusted so that the D50 was 6 $\mu$m and the

particle crushing strength was 570 MPa.

<Example 1>

[Preparation of First Positive Electrode Mixture Slurry]

Lithium metal composite oxide Y1 was used as the positive electrode active material. A first positive electrode mixture slurry was prepared by mixing the positive electrode active material, acetylene black, and polyvinylidene fluoride (PVdF) in a solid mass ratio of 98:1:1, and using N-methyl-2-pyrrolidone (NMP) as the dispersion medium.

[Preparation of Second Positive Electrode Mixture Slurry]

A second positive electrode mixture slurry was prepared in the same manner as the first positive electrode mixture slurry, except that lithium metal composite oxide X2 was used as the positive electrode active material.

[Production of Positive Electrode]

The first and second positive electrode mixture slurries were applied to both sides of a positive electrode core made of aluminum foil to form a coating, and the coating was dried. The first positive electrode mixture slurry was applied to a part corresponding to one widthwise end part of the positive electrode core in an intermittent manner such that exposed portions were left uncoated. As a result, there was formed a first region (or coating that is to constitute the first region) composed of the exposed portions and parts of a positive electrode mixture layer sequentially arranged in the longitudinal direction of the positive electrode. The second positive electrode mixture slurry for forming the second region was applied continuously in the longitudinal direction of the positive electrode core. Next, the coating was rolled using a roller, and then the positive electrode core was cut into a predetermined electrode size to thereby obtain a positive electrode having a positive electrode mixture layer formed on both sides of the positive electrode core.
In the present Example, the positive electrode had a length of 3650 mm, a width of 68 mm, and a ratio of the width of the first region to the width of the second region of 1:6. Further, eight exposed portions having the same size (i.e., a length of 30 mm and a width of 9.7 mm) were provided at equal intervals along the longitudinal direction of the positive electrode. The compressive elastic modulus ($E\alpha$) of the first region and the compressive elastic modulus ($E\beta$) of the second region were measured using a dynamic ultra-micro hardness tester (DUH-211S) manufactured by Shimadzu Corporation, and as a result, $E\alpha$ was 34 GPa, and $E\beta$ was 18 GPa.

[Production of Negative Electrode]

As the negative electrode active material, a mixture obtained by mixing natural graphite and a silicon-containing material (i.e., a composite material in which a fine Si phase is dispersed in a silicon oxide phase) in a mass ratio of 98:2 was used. A negative electrode mixture slurry was prepared by mixing the negative electrode active material, sodium carboxymethyl cellulose (CMC-Na), and a dispersion of styrene-butadiene rubber (SBR) in a solid mass ratio of 100:1:1, and using water as the dispersion medium. The negative electrode mixture slurry was applied to both sides of a negative electrode core made of copper foil, and the applied coating was dried and then rolled using a roller. The resulting product was cut into a predetermined electrode size, and a negative electrode having a negative electrode mixture layer formed on both sides of the negative electrode core was thereby obtained. In a part of the negative electrode, there was provided an exposed portion where the surface of the negative electrode core was exposed.

[Preparation of Non-Aqueous Electrolyte Solution]

Into a mixed solvent prepared by mixing ethylene carbonate (EC), methyl ethyl carbonate (MEC), and dimethyl carbonate (DMC) in a volume ratio of 3:3:4 (at 25 °C), $LiPF_6$ was dissolved to a concentration of 1.2 mol/L, and a non-aqueous electrolyte solution was thereby prepared.

[Production of Test Cell]

Aluminum leads were attached to the exposed portions of the above positive electrode, and a nickel lead was attached to the exposed portion of the above negative electrode. The positive electrode and the negative electrode were wound in a spiral shape with an interposed separator made of polyolefin to thereby produce a spiral-type electrode assembly. This electrode assembly was housed in a bottomed cylindrical outer can, and after injecting the above non-aqueous electrolyte solution therein, the opening of the outer can was sealed with a sealing assembly to obtain a test cell.

<Example 2>

A test cell was produced in the same manner as in Example 1 except that, in the preparation of the first positive electrode mixture slurry, lithium metal composite oxide Y2 was used as the positive electrode active material. $E\alpha$ was 31 GPa, and $E\beta$ was 18 GPa.

<Example 3>

A test cell was produced in the same manner as in Example 1 except that, in the preparation of the first positive electrode mixture slurry, lithium metal composite oxide X1 was used as the positive electrode active material. $E\alpha$ was 21 GPa, and $E\beta$ was 18 GPa.

<Example 4>

A test cell was produced in the same manner as in Example 1 except that, in the preparation of the first positive electrode mixture slurry, lithium metal composite oxide X2 was used as the positive electrode active material, and in the preparation of the second positive electrode mixture slurry, lithium metal composite oxide X3 was used as the positive electrode active material. $E\alpha$ was 18 GPa, and $E\beta$ was 17 GPa.

<Example 5>

A test cell was produced in the same manner as in Example 1 except that, in the preparation of the first positive electrode mixture slurry, a mixture obtained by mixing lithium metal composite oxides Y2 and X1 in a mass ratio of 35:65 was used as the positive electrode active material, and in the preparation of the second positive electrode mixture slurry, a mixture obtained by mixing lithium metal composite oxides Y2 and X1 in a mass ratio of 15:85 was used as the positive electrode active material. $E\alpha$ was 23 GPa, and $E\beta$ was 19 GPa.

<Example 6>

A test cell was produced in the same manner as in Example 5 except that, in the preparation of the second positive electrode mixture slurry, a mixture obtained by mixing lithium metal composite oxides Y2 and X1 in a mass ratio of 25:75 was used as the positive electrode active material. $E\alpha$ was 23 GPa, and $E\beta$ was 20 GPa.

<Example 7>

A test cell was produced in the same manner as in Example 1 except that, in the preparation of the first positive electrode mixture slurry, a mixture obtained by mixing lithium metal composite oxides Y2 and X1 in a mass ratio of 25:75 was used as the positive electrode active material, and in the preparation of the second positive electrode mixture slurry, a mixture obtained by mixing lithium metal composite oxides Y2 and X1 in a mass ratio of 20:80 was used as the positive electrode active material. $E\alpha$ was 20 GPa, and $E\beta$ was 18 GPa.

<Comparative Example 1>

A test cell was produced in the same manner as in Example 2, except that the second region was formed using the first positive electrode mixture slurry, and the first region was formed using the second positive electrode mixture slurry. $E\alpha$ was 18 GPa, and $E\beta$ was 31 GPa.

<Comparative Example 2>

A test cell was produced in the same manner as in Example 2, except that the entire positive electrode mixture layer was formed using the first positive electrode mixture. Both $E\alpha$ and $E\beta$ were 31 GPa.

<Comparative Example 2>

A test cell was produced in the same manner as in Example 2, except that the entire positive electrode mixture layer was formed using the second positive electrode mixture. Both $E\alpha$ and $E\beta$ were 18 GPa.

[Evaluation of Gap between Electrode Plates]

In a temperature environment of 25 °C, each test cell of the Examples and Comparative Examples was charged at a constant current of 0.3 It until the battery voltage reached 4.2 V, and then charged at a constant voltage of 4.2 V until the current value reached 0.02 It. After that, the test cell was discharged at a constant current of 0.5 It until the battery voltage reached 2.5 V. Using this charging and discharging process as one cycle, 200 cycles were performed. Subsequently, a CT image of a cross section of an upper part of the test cell was obtained. Based on the CT image, presence or absence of a gap between the electrode plates of the electrode assembly was checked, and when the gap was present, its size was checked. Table 1 shows the material properties of the positive electrode mixture layers and the evaluation results.

Regarding a part where a gap in the electrode assembly occurred, the gap between the electrode plates was calculated by subtracting half the thickness of each of the electrode plates and the thickness of the separator from the distance between the center line, in the thickness direction, of the electrode plate located on the inner circumference side of the electrode assembly and the center line, in the thickness direction, of the electrode plate located on the outer circumference side of the electrode assembly. Further, the gap was classified as no gap, small gap, medium gap, or large gap based on the following evaluation criteria.

None: Gap of less than 10 $\mu$m
Small: Gap of greater than or equal to 10 $\mu$m and less than 50 $\mu$m
Medium: Gap of greater than or equal to 50 $\mu$m and less than 100 $\mu$m
Large: Gap of greater than or equal to 100 $\mu$m

[Table 1]

| | | First region | | | Second region | | | Evaluation |
|---|---|---|---|---|---|---|---|---|
| | | Active material | E$\alpha$ | Particle crushing strength | Active material | E$\beta$ | Particle crushing strength | Gap between electrode plates |
| | Example 1 | Y1 | 34 GPa | 650 MPa | X2 | 18 GPa | 650 MPa | None |
| | Example 2 | Y2 | 31 GPa | 570 MPa | X2 | 18 GPa | 650 MPa | None |
| | Example 3 | X1 | 21 GPa | 198 MPa | X2 | 18 GPa | 650 MPa | Small |
| | Example 4 | X2 | 18 GPa | 117 MPa | X3 | 17 GPa | 650 MPa | Medium |
| | Example 5 | Y2/X1 (35/65) | 23 GPa | 570/198 MPa | Y2/X1 (15/85) | 19 GPa | 570/198 MPa | None |
| | Example 6 | Y2/X1 (35/65) | 23 GPa | 570/198 MPa | Y2/X1 (25/75) | 20 GPa | 570/198 MPa | Small |
| | Example 7 | Y2/X1 (25/75) | 20 GPa | 570/198 MPa | Y2/X1 (20/80) | 18 GPa | 570/198 MPa | Medium |
| | Comparative Example 1 | X2 | 18 GPa | 117 MPa | Y2 | 31 GPa | 570 MPa | Large |
| | Comparative Example 2 | Y2 | 31 GPa | 570 MPa | Y2 | 31 GPa | 570 MPa | Large |
| | Comparative Example 3 | X2 | 18 GPa | 117 MPa | X2 | 18 GPa | 117 MPa | Large |

As shown in Table 1, a gap between the electrode plates was less likely to occur in all of the test cells of the Examples than in the test cell of Comparative Example 1. When, as in the test cells of the Comparative Examples, the compressive elastic modulus E$\alpha$ of the first region of the positive electrode mixture layer was smaller than the compressive elastic modulus E$\beta$ of the second region or when E$\alpha$ = E$\beta$, a large gap was observed between the electrode plates at the upper part of the electrode assembly. If such a large gap is present, there is a risk that peeling of the mixture layer may occur during charge-discharge cycles. From these results, it can be understood that occurrence of a gap between the electrode plates can be effectively suppressed when $E\alpha > E\beta$. It is considered that in the test cells of the Examples, the surface pressure in the first region (or the axial end part of the electrode assembly) was increased, and the difference in surface pressure with respect to the second region (or the axially central part of the electrode assembly) could be reduced.

The present disclosure is further illustrated by the following embodiments.

Configuration 1: A secondary battery comprising an electrode assembly which includes a positive electrode, a negative electrode, and a separator, and in which the positive electrode and the negative electrode are wound with the separator interposed, wherein: the positive electrode has an elongate positive electrode core and a positive electrode mixture layer provided on the positive electrode core; exposed portions where a surface of the positive electrode core is exposed are provided at a widthwise end part of the positive electrode in a plural number along a longitudinal direction of the positive electrode; and, when a region composed of the exposed portions and parts of the positive electrode mixture layer sequentially arranged in the longitudinal direction of the positive electrode is defined as a first region, and a region in which the positive electrode mixture layer is continuous in the longitudinal direction of the positive electrode is defined as a second region, a compressive elastic modulus of the first region is greater than a compressive elastic modulus of the second region.

Configuration 2: The secondary battery according to Configuration 1, wherein the compressive elastic modulus of the first region is greater than or equal to 18 GPa and less than or equal to 35 GPa.

Configuration 3: The secondary battery according to Configuration 1 or 2, wherein an average value of particle crushing strength of a positive electrode active material contained in the first region is greater than or equal to 250 MPa.

Configuration 4: The secondary battery according to any one of Configurations 1 to 3, wherein the first region contains a first positive electrode active material in a form of single particles.

Configuration 5: The secondary battery according to any one of Configurations 1 to 4, wherein the first region and the second region contain a first positive electrode active material in a form of single particles and a second positive electrode active material in a form of secondary particles formed by aggregation of primary particles having an average particle size of greater than or equal to 50 nm and less than or equal to 5 $\mu$m, a proportion of the first positive electrode active material in a positive electrode active material contained in the first region is greater than or equal to 30 mass%, and a proportion of the first positive electrode active material in a positive electrode active material contained in the second region is greater than or equal to 15 mass% and less than or equal to 30 mass%.

REFERENCE SIGNS LIST

1 cylindrical battery; 10 electrode assembly; 11 positive electrode; 12 positive electrode lead; 13 positive electrode core; 14 positive electrode mixture layer; 14a first region; 14b second region; 15 exposed portion; 20 outer can; 21 side wall; 22 can bottom; 23 grooved portion; 30 sealing assembly; 31 cap; 32 current collector plate; 32a, 33a opening; 32b projection; 33 gasket; 40 upper insulating plate; 41 first insulating plate; 42 second insulating plate

**Claims**

1.  A secondary battery comprising an electrode assembly which includes a positive electrode, a negative electrode, and a separator, and in which the positive electrode and the negative electrode are wound with the separator interposed, wherein

    the positive electrode has an elongate positive electrode core and a positive electrode mixture layer provided on the positive electrode core,
    at a widthwise end part of the positive electrode, exposed portions where a surface of the positive electrode core is exposed are provided in a plural number along a longitudinal direction of the positive electrode, and
    when a region composed of the exposed portions and parts of the positive electrode mixture layer sequentially arranged in the longitudinal direction of the positive electrode is defined as a first region, and a region in which the positive electrode mixture layer is continuous in the longitudinal direction of the positive electrode is defined as a second region, a compressive elastic modulus of the first region is greater than a compressive elastic modulus of the second region.

2.  The secondary battery according to claim 1, wherein the compressive elastic modulus of the first region is greater than or equal to 18 GPa and less than or equal to 35 GPa.

3.  The secondary battery according to claim 1 or 2, wherein an average value of particle crushing strength of a positive electrode active material contained in the first region is greater than or equal to 250 MPa.

4. The secondary battery according to claim 1 or 2, wherein the first region contains a first positive electrode active material in a form of single particles.

5. The secondary battery according to claim 1 or 2, wherein

the first region and the second region contain a first positive electrode active material in a form of single particles, and a second positive electrode active material in a form of secondary particles formed by aggregation of primary particles,
a proportion of the first positive electrode active material in a positive electrode active material contained in the first region is greater than or equal to 30 mass%, and
a proportion of the first positive electrode active material in a positive electrode active material contained in the second region is greater than or equal to 15 mass% and less than or equal to 30 mass%.

## Figure 1

# Figure 2

## INTERNATIONAL SEARCH REPORT

| | International application No. |
|---|---|
| | **PCT/JP2024/006716** |

### A. CLASSIFICATION OF SUBJECT MATTER

*H01M 10/04*(2006.01)i; *H01M 4/13*(2010.01)i; *H01M 4/36*(2006.01)i; *H01M 10/0587*(2010.01)i
FI:  H01M10/04 W; H01M4/13; H01M4/36 D; H01M10/0587

According to International Patent Classification (IPC) or to both national classification and IPC

### B. FIELDS SEARCHED

Minimum documentation searched (classification system followed by classification symbols)

H01M10/04; H01M4/13; H01M4/36; H01M10/0587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | WO 2022/209112 A1 (PANASONIC INTELLECTUAL PROPERTY MANAGEMENT CO., LTD.) 06 October 2022 (2022-10-06)<br>claims, paragraphs [0032], [0036], fig. 14 | 1-5 |
| A | WO 2019/193882 A1 (PANASONIC INTELLECTUAL PROPERTY MANAGEMENT CO., LTD.) 10 October 2019 (2019-10-10)<br>claims, paragraphs [0046]-[0049], fig. 6 | 1-5 |
| A | WO 2016/174992 A1 (HITACHI AUTOMOTIVE SYSTEMS, LTD.) 03 November 2016 (2016-11-03)<br>paragraphs [0047]-[0049] | 1-5 |
| A | WO 2022/050158 A1 (SANYO ELECTRIC CO., LTD.) 10 March 2022 (2022-03-10)<br>claims | 1-5 |
| A | WO 2021/039751 A1 (PANASONIC CORPORATION) 04 March 2021 (2021-03-04)<br>claims | 1-5 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 May 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/006716**

| Patent document cited in search report | | | Publication date (day/month/year) | Patent family member(s) | | | Publication date (day/month/year) |
|---|---|---|---|---|---|---|---|
| WO | 2022/209112 | A1 | 06 October 2022 | CN 117099222 A claims, paragraphs [0058], [0062], fig. 14 | | | |
| WO | 2019/193882 | A1 | 10 October 2019 | US 2021/0013482 A1 claims, paragraphs [0055]-[0058], fig. 6 EP 3780162 A1 CN 111971820 A | | | |
| WO | 2016/174992 | A1 | 03 November 2016 | (Family: none) | | | |
| WO | 2022/050158 | A1 | 10 March 2022 | US 2023/0317941 A1 claims EP 4209461 A1 CN 115968356 A | | | |
| WO | 2021/039751 | A1 | 04 March 2021 | US 2022/0285678 A1 claims EP 4024528 A1 CN 114342112 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001176489 A